# EUROPEAN PATENT SPECIFICATION

(11) **EP 0 533 754 B1**
(45) Date of publication and mention of the grant of the patent: **03.11.2004**
(21) Application number: 91910941.3
(22) Date of filing: 07.06.1991
(51) Int. Cl.: B01D 24/16, B01D 24/46, C02F 3/10

(54) **METHOD OF BIOLOGICAL TREATMENT OF LIQUID**
VERFAHREN ZUR BIOLOGISCHEN BEHANDLUNG VON FLÜSSIGKEIT
PROCEDE DE TRAITEMENT BIOLOGIQUE D'UN LIQUIDE

(30) Priority: 07.06.1990 GB 9012703
(43) Date of publication of application: 31.03.1993
(60) Divisional application: 02021574.5
(73) Proprietor: Brightwater Engineering Ltd., Letchworth SG6 2HB (GB)
(72) Inventor: CANTWELL, Alan David Cole, Aston, Herts. SG2 7EX (GB); EVANS, Ian David, Ely, Cambs. CB7 4PQ (GB); WHITAKER, John, Peterborough PE2 0YZ (GB)
(74) Representative: Burrows, Anthony Gregory
(86) International application number: PCT/GB1991/000912
(87) International publication number: WO 1991/018658

(56) References cited:
- EP-A- 0 265 303
- FR-A- 2 538 800
- GB-A- 833 327
- GB-A- 1 601 380
- GB-A- 2 080 696
- US-A- 3 424 674
- US-A- 4 246 118

## Description

This invention relates to upward filtration using a buoyant medium, and suitable for use in water purification, and especially to sewage treatment or the treatment of industrial waste waters.

In Filtration & Separation, November/December 1987, pages 399-406, an article by Hunter entitled "Recent Developments in Buoyant Media Liquid Filtration" discusses published buoyant filter medium systems. The article also reports results obtained in the filtration of various aqueous systems, including raw sewage, using the buoyant "macrospheres" described in US-A-4111713. The buoyant particles were retained under a screen. Satisfactory results were obtained, provided that the screen was periodically cleaned by back-washing.

EP-A-0347296 discloses a method in which air and water to be biologically filtered are pumped up a column, including a perforate screen, through a lower fluidised bed of particles that are lighter than water and then through an upper fixed bed of smaller and lighter particles. Backwashing is provided for.

The article by Hunter also refers, inter alia, to GB-A-2080696 which discloses apparatus comprising a vessel having lower liquid and gas injection inlets and an upper liquid outlet, and a bed of a buoyant filter medium in the vessel. The injector periodically disperses fine air bubbles throughout water flowing upwardly through the bed whose buoyancy is such that at least some of the particles will descend in the water/air mixture, and trapped impurities will be released during the resultant bed expansion. The apparatus is designed for water filtration, and intentionally avoids the use of any internal screen, in the vessel, of the type that has been used to retain buoyant material.

FR-A-2538800, which is considered to be the closest prior art to the invention of claim 1, discloses the biological treatment of liquid, for example urban waste water using a retained bed of buoyant particles which is cleaned by backwashing. Continuous or intermittent injection of gas is disclosed. The expansion of a bed of buoyant particles by gas injection, in filtration processes, is disclosed in GB-A-1601380 and US-A-4246118.

An object of the present invention is to improve the process of intermittent removal of biomass from a biological filter including particles upon which the biomass grows, which is not easy, since the biomass tends to grow into and around the particles where possible.

According to the present invention, there is provided a method of biological treatment of liquid and thereby removing biodegradable impurities from said liquid, comprising causing the liquid to flow up a column having a lower liquid inlet, an upper liquid outlet and an intermediate internal screen below which is confined a bed of buoyant particles on which biomass grows, and intermittently operating expansion means to expand the bed of buoyant particles, and removing biomass-carrying liquid, characterised in that, normally, gas is introduced into said liquid at a first rate to flow upwardly through said liquid such that said bed is left substantially undisturbed, and, intermittently, gas is introduced into said liquid at a second rate higher than said first rate to flow upwardly through said liquid to expand said bed and, with the bed in its expanded condition, to give scouring of the particles to remove a proportion of the biomass from the particles, in that the expansion of the bed is caused by only said gas introduced into said liquid at said second rate, and in that said removing comprises draining out from said column said biomass-carrying liquid.

Owing to the invention, the process of removal of biomass from around the particles is improved, since the expansion of the bed is caused by only the gas introduced into the liquid at the second rate.

In a preferred embodiment, biomass is removed from a liquid using a column having a lower liquid inlet, an upper liquid outlet and an intermediate internal screen below which is confined a bed of buoyant particles on which the biomass will grow, by a process which comprises:
pumping an oxygen-containing gas and the liquid so that they flow up the column, substantially without disturbing the bed, to give treated liquid above the screen and below the outlet;
intermittently increasing the gas flow, such that the particles are less buoyant, and the biomass on the particles is removed by attrition as the particles circulate; and
draining-off the biomass-containing liquid thus obtained, and washing the bed with the treated liquid, while the liquid pump is shut off.

The present method can be used for separating impurities from any biologically-degradable liquid system, e.g. sewage, by pumping the liquid up the column, the column including, below the screen, the bed of buoyant particles on which the biomass will grow or be entrapped. The biomass-carrying particles thus remove both particulate and dissolved biodegradable and filterable material from the flow. The method also comprises intermittently expanding the bed, so as to remove accumulated solid materials.

In a principal embodiment of the invention there are a lower gas inlet and also means adapted to cause upward gas flow at each of at least two flow rates. This gas pump can be used to cause expansion of the bed, by operating it such that the particles are no longer so buoyant; this leads to disruption of the bed, and biomass on the particles is removed by attrition as the particles circulate.

The particles used in this principal embodiment should be buoyant with respect to liquid and gas in certain proportions (e.g. in the steady state, when the gas flow is nil or at a first rate) but less buoyant when the proportion of gas is increased, when the delivery of gas is increased to a second rate. After this scouring operation, a proportion of the biomass is removed from the buoyant medium and is in suspension. The liquid may now be drained out, for which purpose the apparatus may comprise a lower liquid outlet; such an outlet will usually include a screen that prevents the particles from escaping from the column.

If the gas contains oxygen, e.g. is air, it is a characteristic of the present invention that the liquid can be constantly aerated, and that the biomass can continuously undergo aeration. The gas inlet is suitably in the form of a bubble diffuser. The conditions of flow should be such that fine bubbles only, .e.g. 1 to 3mm in size, are generated during "steady state" conditions, i.e. during liquid flow, while the particles are buoyant; the bed is thus left substantially undisturbed when the bubbles enter the medium. This is in contrast to the requirement of the intermittent, scouring flow.

It has been found that the gas flow, which causes an air lift effect, reduces problems that might be associated with a change in flow rate. It appears that the pressure drop varies linearly with the flow, rather than with the square of flow. A preferred flow rate is 1 to 20, e.g. 3 to 10, m/hr (superficial velocity) of free air for aeration and 5 to 50, e.g. 15 to 25 m/hr for scouring.

Filtration can also be achieved in one-and-the-same tank, by compartmentalisation to give a further, filtration zone above a first screen retaining buoyant particles.

In general, the apparatus and process of the invention may be used for tertiary treatment, to produce nitrification. The influent liquid is taken from a secondary treatment with reduced effluent strength. Intervals between back-washing would be sufficient to allow nitrifying bacteria to grow. The apparatus for this purpose could be compact in size, readily allowing insulation and thus reducing seasonal effect (i.e. sloughing).

It will often be convenient that pumps should be provided, to cause liquid upflow and gas flow, respectively. It is also possible to use a vacuum pump, to create reduced pressure at the top of the column, to cause liquid and/or gas flow, or to use a hydrostatic head of pressure.

Each inlet and each outlet may comprise a valve. The lower liquid inlet and lower liquid outlet will be controlled so that they are not both open at the same time; the liquid pump will usually be shut off while liquid is drained. The lower liquid outlet may be connected to a conventional filter, so that the concentrated solids can be removed, or passed to a sludge outlet without loss of the medium.

The depth of the bed is, for example, 1 to 3 m in an aerated system, or 0.5 to 2 m for tertiary treatment. The particles are, for example, 1 to 10 mm, preferably 2 to 5 mm, in maximum dimension. They are preferably of polyethylene or polypropylene. Other materials with a suitable buoyancy achieved by inclusions of air pockets may also be used; examples of such materials are expanded polyethylene or foams made from synthetic or natural rubbers such as polyisobutyl rubbers.

It is often preferred that the particles should have a shape which allows biomass to be trapped or attached: essentially cylindrical particles may have helical or linear elongate surface grooves, i.e. being star-like or crenellated in cross-section, or be tube-like; all of which forms, or other forms, preferably with included angles from which biomass cannot be removed easily, can be produced by extrusion or moulding of suitable material, and chopping. The particle surface, alternatively or in addition, may be roughened by abrasion, milling or chemical treatment, e.g. with powders, polymers, or solvent emulsions, or by the inclusion of solid material such as chalk, alumina, carbon or talc; chalk or other water-soluble materials are particularly suitable since they dissolve to create a pitted surface which encourages biomass adhesion. Sponge-like and sintered forms of suitable polymers are also known and can be used.

The screen has holes which should be small enough to retain the particles beneath it, but not so small that there is any substantial hydraulic resistance. For example, for particles down to 3mm in size, the screen apertures will usually be 2.3 to below 3 mm.

In order to minimise disruption to a filtration system, two or more units may be operated in accordance with the invention; one can be back-washed while another provides filtration. Further, one unit can be operated while another is "rested": a rest period (i.e. with no net flow) may be desirable, to allow the re-attachment of biomass to the particles. Another desirable option is to recycle materials after back-washing, since otherwise the effluent quality may fall off after back-washing.

The invention will now be described by way of example only with reference to the accompanying drawings, in which each of Figs. 1 and 2 is a schematic representation of a different embodiment of the invention and Fig. 3 is a schematic representation of an operational pilot plant.

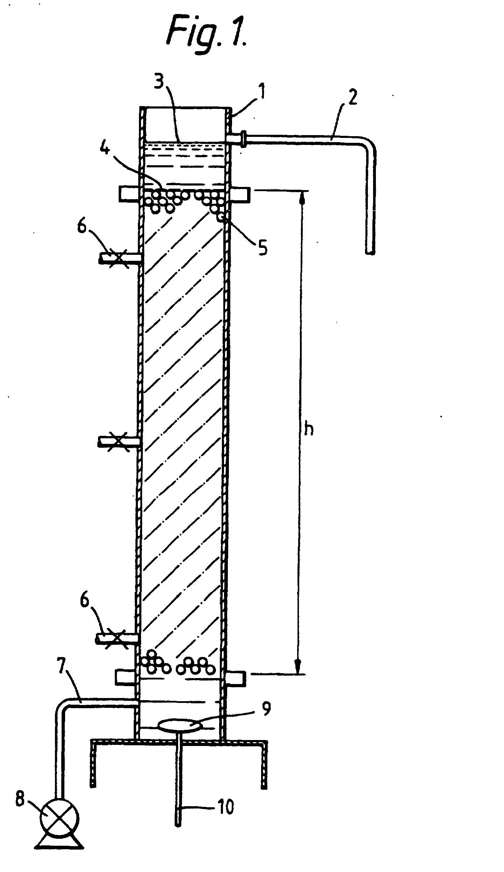

Fig. 1 shows a reactor column 1 having an upper outlet 2 that defines the water level 3 in the column. Below the outlet 2, a screen 4 retains a bed 5 of beads of a buoyant medium. The screen 4 therefore also defines a clear liquid region above it.

The bed 5 has a height h (e.g. 2m). Through the height of the bed, there are sampling points 6.

Below the bed, a liquid inlet 7 is supplied via a pump 8. Also below the bed is an air diffuser 9 through which air is supplied through an inlet 10 by operation of a second pump (not shown). The second pump is operated continuously, to aerate and also, on demand, by means of a timer, to produce a higher flow which gives a scouring action. While the air flow is normal, the filter bed is buoyant. The scouring flow renders the bed material less buoyant, so that scouring is caused as the beads circulate in the liquid: increased flow over the bead surfaces shears excess biomass into suspension.

In order to clean the filter, the pump 8 may be turned off and the filter be back-washed using the liquid in the upper, clear zone, which is taken through a drain point (not shown).

Satisfactory results have been obtained for the treatment of domestic sewage, using a Jabsco variable speed pump to provide sewage upflow at a rate of 48 l/hr, a normal air flow of 0.4-1.2 m³/hr, and by operating the scour flow (2-4 m³/hr) every 3-4 days. Polypropylene particles were used, having surface recesses, and a maximum dimension of 4mm. Attrition did not remove the biomass in the recesses so quickly, thereby encouraging the retention and further growth of biomass after scouring, under renewed steady-state conditions.

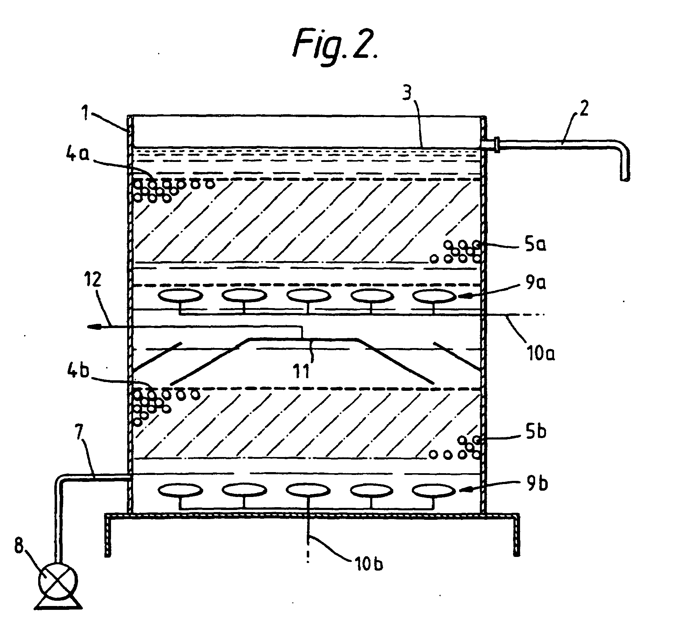

The apparatus and process are also suitable for primary/secondary treatment. In order to allow carbonaceous oxidation and filtration zones, compartmentalisation is preferred, as shown in Fig. 2, by using two screens 4a, 4b (and in which components parallel to those shown in Fig. 1 have the same reference numerals). The upper screen 4a retains a bed 5a which acts as a filtration zone. The lower screen 4b retains a bed 5b which acts as a nitrifying zone. Air diffusers 9a and 9b are provided, with associated inlets 10a and 10b. A cowl 11 minimises the effect of any turbulence on the upper bed 5a, and leads to an air and backwash water outlet 12.

Fig. 2 illustrates an embodiment that is an alternative to a different form of compartmentalisation, i.e. different zones in different columns, which may often be preferred. Compartmentalisation may also be appropriate in tertiary treatment, as described above, to provide nitrifying and filtration zones.

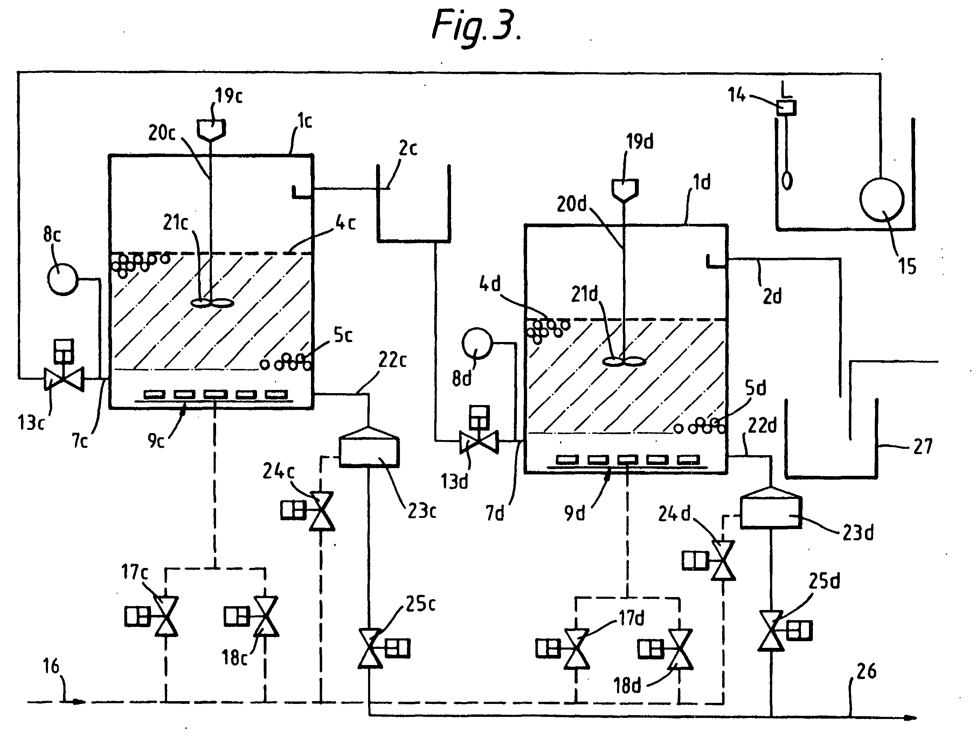

Fig. 3 shows an operational pilot plant comprising similar reactor vessels 1c,1d each having a liquid inlet zone supplied via an inlet 7c,7d controlled by a valve 13c, 13d. Reactor 1c is supplied with liquid from a tank having a level sensor 14 by means of a pump 15. A pressurised air line 16 (indicated by a chain line) supplies bubble aerators 9c,9d in each reactor, each via an aeration valve 17c,17d and a scouring flow valve 18c, 18d. Each reactor includes a bed 5c,5d of particulate material retained beneath a screen 4c,4d. From vessel 1c, an upper liquid outlet 2c (in an intermediate tank) leads via the valve 13d to the lower liquid inlet 7d in the reactor 1d.

Each bed 5c,5d can be "broken" by operation of a motor 19c,19d connected via a shaft 20c,20d to a paddle 21c,21d within the bed. An outlet 22c,22d for drained liquid from each reactor leads, via a filter 23c,23d that can be supplied with air from the line 16 via an associated valve 24c,24d, via sludge valves 25c,25d, to a common sludge outlet 26. An upper liquid outlet 2d in reactor 1d leads via a tank 27 to discharge or a further purification stage, if necessary by using a pump (not shown).

The system illustrated in Fig. 3 can be operated in the manner described above, to give efficient aerobic treatment and resultant sludge. Each scouring valve is opened to increase the air flow through the respective beds, to expand them. The pump supplying liquid to the reactor 1c may be turned off while the solids are drained off through the filter.

In a particular example, evaluated on a pilot scale, 2 columns each 0.3m in internal diameter and containing a 1.6m high bed of 3-4mm polypropylene beads were operated. Settled sewage having a strength between 80 and 700 mg BOD/l and a loading between 0.78 and 6.27kg BOD/m³.day was bed to the first column by pumping at a rate of 0.73-1.33 l/min. Effluents in the range of 5 and 51 mg BOD/l were obtained. This effluent was then fed to the second column for removal of ammonia. The ammonia was substantially removed at loading rates of 0.04 to 0.71 kgN/m³.day. Each column was aerated using a ceramic diffuser fed with 6 l/m air. Typical results are shown in the following Tables.

| **CARBONACEOUS TREATMENT** | | | | | | | |
|---|---|---|---|---|---|---|---|
| Date | Flow l/min | BOD | | SS | | Loading KgBOD/m3.day | %Removal |
| | | in | out | in | out | | |
| 11.6 | 0.81 | 135 | 6 | 202 | 10 | 1.3 | 95.8 |
| 13.6 | 0.86 | 80 | 9 | 87 | 10 | 0.78 | 88.8 |
| 15.6 | 0.86 | 230 | 10 | 222 | 7 | 2.42 | 95.7 |
| 18.6 | 0.83 | 170 | 7 | 216 | 9 | 1.74 | 95.9 |
| 20.6 | 0.77 | 250 | 10 | 156 | 12 | 2.55 | 96.0 |
| 22.6 | 0.85 | 192 | 6 | 161 | 12 | 2.03 | 96.6 |
| 27.6 | 0.79 | 220 | 8 | 233 | 11 | 2.15 | 96.3 |
| 29.6 | 0.79 | 224 | 8 | 141 | 10 | 2.18 | 96.4 |
| 02.7 | 0.77 | 185 | 9 | 240 | 9 | 1.74 | 95.1 |
| 04.7 | 0.76 | 120 | 8 | 179 | 8 | 1.09 | 93.3 |
| 06.7 | 1.0 | 200 | 10 | 166 | 12 | 2.44 | 95.0 |
| 09.7 | 0.92 | 225 | 14 | 157 | 10 | 2.5 | 93.8 |
| 10.7 | 0.9 | 192 | 14 | 168 | 15 | 2.05 | 92.7 |
| 16.7 | 0.86 | 245 | 9 | 207 | 9 | 2.6 | 96.3 |
| 17.7 | 0.87 | 270 | 14 | 172 | 5 | 2.85 | 94.7 |
| 20.7 | 0.95 | 245 | 10 | 167 | 10 | 2.87 | 95.7 |
| 23.7 | 0.96 | 255 | 18 | 186 | 17 | 2.72 | 92.8 |
| 25.7 | 0.92 | 212 | 9 | 200 | 10 | 2.40 | 95.0 |
| 27.7 | 0.90 | 304 | 10 | 208 | 9 | 3.37 | 96.7 |
| 01.8 | 0.86 | 188 | 7 | 162 | 5 | 2.0 | 96.1 |
| 03.8 | 0.86 | 220 | 10 | 142 | 5 | 2.31 | 95.6 |
| 05.8 | 0.86 | 270 | 14 | 178 | 8 | 2.82 | 94.8 |
| 07.8 | 0.86 | 195 | 11 | 151 | 6 | 2.02 | 94.3 |
| 13.8 | 0.91 | 250 | 10 | 221 | 10 | 2.8 | 96.0 |
| 15.8 | 0.91 | 235 | 9 | 148 | 7 | 2.64 | 96.1 |
| 20.8 | 0.92 | 270 | 12 | 226 | 7 | 3.05 | 95.5 |
| 22.8 | 0.91 | 250 | 17 | 205 | 10 | 2.72 | 93.2 |
| 24.8 | 1.33 | 235 | 12 | 197 | 16 | 3.82 | 94.9 |
| 27.8 | 1.33 | 260 | 17 | 237 | 13 | 4.15 | 93.5 |
| 28.8 | 1.33 | 225 | 10 | 220 | 10 | 3.68 | 95.5 |
| 07.9 | 1.28 | 270 | 5 | 258 | 27 | 4.34 | 98.2 |
| 01.10 | 1.03 | 370 | 10 | 282 | 14 | 4.78 | 97.3 |
| 15.10 | 0.8 | 360 | 16 | 313 | 19 | 3.53 | 95.5 |
| 16.10 | 0.78 | 304 | 17 | 467 | 19 | 2.87 | 94.4 |
| 22.10 | 0.73 | 368 | 18 | 255 | 19 | 3.28 | 95.1 |
| 24.10 | 0.75 | 336 | 14 | 532 | 16 | 3.1 | 95.8 |
| 26.10 | 0.83 | 304 | 21 | 341 | 19 | 3.03 | 93.1 |
| 28.10 | 0.79 | 182 | 9 | 204 | 11 | 1.75 | 95.5 |
| 31.10 | 0.78 | 294 | 12 | 217 | 12 | 2.82 | 95.9 |
| 02.11 | 0.75 | 270 | 6 | 217 | 9 | 2.54 | 97.8 |
| 13.11 | 1.09 | 203 | 12 | 182 | 9 | 2.67 | 94.1 |
| 15.11 | 1.03 | 280 | 7 | 308 | 11 | 3.62 | 97.5 |
| 19.11 | 1.09 | 462 | 14 | 418 | 16 | 6.27 | 97.0 |
| 21.11 | 1.05 | 208 | 16 | 241 | 11 | 2.59 | 92.3 |
| 23.11 | 1.02 | 354 | 25 | 264 | 18 | 4.29 | 92.9 |
| 26.11 | 1.07 | 392 | 22 | 370 | 16 | 5.09 | 94.4 |
| 28.11 | 1.07 | 480 | 34 | 543 | 21 | 6.10 | 92.5 |
| 03.12 | 1.15 | 701 | 51 | 882 | 58 | 9.63 | 92.7 |
| 05.12 | 1.13 | 381 | 37 | 377 | 49 | 4.98 | 90.3 |

| **NITRIFICATION COLUMN** | | | | | | | | | |
|---|---|---|---|---|---|---|---|---|---|
| Date | Flow l/sec | Ammonia | | BOD | | SS | | Load KgN/m3.d | %Removed |
| | | In | Out | In | Out | In | Out | | |
| 11.6 | 1.25 | 2.7 | 0.2 | 6 | 3 | 12 | 5 | 0.0423 | 92.5 |
| 15.6 | 1.62 | 3.6 | 0.1 | 4 | 1 | 17 | 8 | 0.079 | 97.0 |
| 18.6 | 0.55 | 4.6 | 1.0 | 7 | 3 | 12 | 5 | 0.027 | 78.0 |
| 20.6 | 1.5 | 6.6 | 1.0 | 8 | 6 | 9 | 7 | 0.114 | 84.8 |
| 22.6 | 2.5 | 4.9 | 0.1 | 4 | 2 | 11 | 8 | 0.116 | 97.9 |
| 25.6 | 2.31 | 6.5 | 0.1 | 5 | 4 | 11 | 8 | 0.204 | 98.5 |
| 27.6 | 2.31 | 7.1 | 0.1 | 4 | 2 | 14 | 10 | 0.219 | 98.6 |
| 29.6 | 1.58 | 6.0 | 0.1 | 5 | 3 | 12 | 11 | 0.129 | 98.3 |
| 02.7 | 1.5 | 3.8 | 0.1 | 5 | 2 | 6 | 5 | 0.0774 | 97.4 |
| 04.7 | 0.73 | 2.8 | 0.1 | 7 | 2 | 18 | 5 | 0.027 | 96.4 |
| 06.7 | 1.33 | 4.2 | 0.1 | 3 | - | 6 | 7 | 0.076 | 97.6 |
| 09.7 | 0.95 | 6.9 | 0.1 | 8 | 1 | 16 | 5 | 0.089 | 98.5 |
| 10.7 | | 0.9 | 0.1 | 6 | 2 | 9 | 7 | | |
| 16.7 | | 3.4 | 0.1 | 10 | 2 | 22 | 11 | | |
| 17.7 | | 1.9 | 0.1 | 6 | 2 | 9 | 10 | | |
| | | | | | | | | | |
| 20.7 | 0.95 | 27.1 | 23.9 | 12 | 2 | 8 | 10 | 0.041 | 11.8 |
| 23.7 | 0.895 | 34.1 | 22.5 | 18 | 10 | 17 | 6 | 0.141 | 34.0 |
| 25.7 | 0.923 | 29.9 | 6.5 | 9 | 4 | 10 | 4 | 0.293 | 78.3 |
| 27.7 | 0.895 | 25.5 | 0.1 | 10 | 5 | 9 | 3 | 0.297 | 99.6 |
| 30.7 | 0.895 | 31.4 | 0.1 | 32 | 2 | 31 | 6 | 0.38 | 99.7 |
| 01.8 | 0.86 | 30.8 | 0.1 | 7 | 3 | 5 | 5 | 0.357 | 99.7 |
| 03.8 | 0.86 | 32.9 | 0.3 | 10 | 1 | 5 | 3 | 0.379 | 99.1 |
| 05.8 | 0.86 | 43.3 | 0.5 | 14 | 6 | 8 | 6 | 0.498 | 98.8 |
| 07.8 | 0.86 | 33.7 | 0.1 | 11 | - | 6 | 4 | 0.415 | 99.7 |
| 10.8 | 0.9 | 15.1 | 0.1 | 14 | 3 | 13 | 4 | 0.18 | 99.3 |
| 13.8 | 0.91 | 41.7 | 0.6 | 10 | 4 | 10 | 7 | 0.507 | 98.6 |
| 15.8 | 0.91 | 36.7 | 0.5 | 9 | 4 | 7 | 8 | 0.447 | 98.6 |
| 17.8 | 0.91 | 25.2 | 0.1 | 17 | 3 | 10 | 3 | 0.31 | 99.6 |
| 20.8 | 0.92 | 28.1 | 0.1 | 12 | 3 | 7 | 7 | 0.351 | 99.6 |
| 22.8 | 0.91 | 25.0 | 0.1 | 17 | 3 | 10 | 3 | 0.31 | 99.6 |
| 24.8 | 1.33 | 33.0 | 0.1 | 12 | 3 | 16 | 4 | 0.595 | 99.7 |
| 27.8 | 1.33 | 39.3 | 0.1 | 17 | 2 | 13 | 5 | 0.71 | 99.8 |
| 28.8 | 1.33 | 24.5 | 1.0 | 10 | 4 | 10 | 4 | 0.4 | 94 |
| 31.8 | | 31.1 | 0.4 | 59 | 2 | 55 | 8 | | |
| 05.9 | | 33.0 | 0.3 | 75 | 6 | 56 | 9 | | |
| 07.9 | 1.28 | 39.5 | 0.9 | 5 | 4 | 27 | 12 | 0.67 | 97.7 |
| 01.10 | 1.03 | 35.3 | 2.4 | 10 | 8 | 14 | 13 | 0.462 | 93.2 |
| 08.10 | | 43.6 | 0.2 | 34 | 6 | 31 | 10 | | |
| 10.10 | | 39.3 | 0.5 | 160 | 10 | 68 | 11 | | |
| 12.10 | | 39.3 | 1.1 | 85 | 6 | 62 | 11 | | |
| 15.10 | 0.8 | 41.5 | 0.4 | 16 | 10 | 19 | 18 | 0.446 | 99.0 |
| 16.10 | 0.78 | 45.8 | 1.0 | 17 | 5 | 19 | - | 0.50 | 97.8 |
| 22.10 | 0.73 | 40.6 | 1.2 | 18 | 12 | 14 | 25 | 0.395 | 97.0 |
| 24.10 | 0.75 | 41.2 | 2.7 | 14 | 21 | 16 | 36 | 0.392 | 93.4 |
| 26.10 | 0.83 | 26.0 | 0.2 | 21 | 16 | 19 | 32 | 0.29 | 99.2 |
| 28.10 | 0.79 | 31.2 | 0.5 | 9 | 7 | 11 | 14 | 0.329 | 98.3 |
| 31.10 | 0.78 | 32.5 | 1.4 | 12 | 13 | 12 | 17 | 0.329 | 95.6 |
| 02.11 | 0.75 | 34.8 | 0.1 | 6 | 8 | 10 | 17 | 0.353 | 99.7 |
| 09.11 | 1.2 | 48.9 | 0.6 | 57 | 8 | 35 | 32 | 0.44 | 98.8 |

## Claims

1. A method of biological treatment of liquid and thereby removing biodegradable impurities from said liquid, comprising causing the liquid to flow up a column (1) having a lower liquid inlet (7), an upper liquid outlet (2) and an intermediate internal screen (4) below which is confined a bed of buoyant particles (5) on which biomass grows, and intermittently operating expansion means to expand the bed of buoyant particles (5), and removing biomass-carrying liquid, **characterised in that**, normally, gas is introduced into said liquid at a first rate to flow upwardly throughsaid liquid such that said bed is left substantially undisturbed, and, intermittently, gas is introduced into said liquid at a second rate higher than said first rate to flow upwardly through said liquid to expand said bed and, with the bed in its expanded condition, to give scouring of the particles (5) to remove a proportion of the biomass from the particles (5), **in that** the expansion of the bed is caused by only said gas introduced into said liquid at said second rate, and **in that** said removing comprises draining out from said column (1) said biomass-carrying liquid.

2. A method according to claim 1, wherein the gas introduced at said first rate is contains oxygen.

3. A method according to claim 1 or 2, wherein the liquid flowing up the column (1) passes through a second intermediate internal screen (4b) and a second bed of buoyant particles (5b) confined below the second screen (4b) .

4. A method according to claim 3, in which the liquid flowing up the column (1) passes through turbulence reducing means (11) above the lower of the screens (4b).

5. A method according to any preceding claim, wherein said particles are of impervious material.

6. A method according to claim 5, in which the particles (5) are of polyethylene or polypropylene.

7. A method according to any preceding claim, in which the particles (5) have been roughened by abrasion, milling or chemical treatment, or by the inclusion of solid material.

8. A method according to claim 7, in which the solid material is water-soluble.

9. A method according to any preceding claim, wherein the shape of the particles (5) has included angles from which biomass cannot be removed easily.

10. A method according to any preceding claim, in which the liquid is sewage.

11. A method according to any preceding claim, in which the gas flow rate, substantially without disturbing the bed, is 1 to 20 m/h, and the intermittent gas flow rate is 5 to 50 m/h.

12. A method according to any preceding claim, in which the particles (5) are 1 to 10 mm in maximum dimension.

## Patentansprüche

1. Verfahren zur biologischen Behandlung von Flüssigkeit, wodurch biologisch abbaubare Verunreinigungen aus der Flüssigkeit entfernt werden, umfassend das Aufwärtsströmenlassen der Flüssigkeit durch eine Säule (1) mit einem unteren Flüssigkeitseinlass (7), einem oberen Flüssigkeitsauslass (2) und einem dazwischenliegenden internen Sieb (4), unterhalb dessen ein Bett von schwimmfähigen Teilchen (5) festgehalten ist, auf denen Biomasse wächst, und das in gewissen Abständen erfolgende Betreiben eines Expansionsmittels, so dass das Bett der schwimmfähigen Teilchen (5) ausgedehnt wird, und das Entfernen von biomassentragender Flüssigkeit, **dadurch gekennzeichnet, dass** normalerweise Gas mit einer ersten Geschwindigkeit in die Flüssigkeit eingeleitet wird, wobei es nach oben durch die Flüssigkeit strömt, so dass das Bett im Wesentlichen ungestört bleibt, und in gewissen Abständen Gas mit einer zweiten Geschwindigkeit, die größer als die erste Geschwindigkeit ist, in die Flüssigkeit eingeleitet wird, wobei es nach oben durch die Flüssigkeit strömt und dabei das Bett ausdehnt und, während sich das Bett im ausgedehnten Zustand befindet, eine Reinigung der Teilchen (5) bewirkt, wobei ein Teil der Biomasse von den Teilchen (5) entfernt wird, dadurch dass die Expansion des Bettes nur durch das Gas verursacht wird, das mit einer zweiten Geschwindigkeit in die Flüssigkeit eingeleitet wird, und dadurch dass die Entfernung das Ablaufenlassen der biomassentragenden Flüssigkeit aus der Säule (1) umfasst.

2. Verfahren gemäß Anspruch 1, wobei das mit der ersten Geschwindigkeit eingeleitete Gas Sauerstoff enthält.

3. Verfahren gemäß Anspruch 1 oder 2, wobei die aufwärts durch die Säule (1) strömende Flüssigkeit durch ein zweites dazwischenliegendes internes Sieb (4b) und ein zweites Bett von schwimmfähigen Teilchen (5b), die unterhalb des zweiten Siebs (4b) festgehalten werden, fließt.

4. Verfahren gemäß Anspruch 3, wobei die aufwärts durch die Säule (1) strömende Flüssigkeit durch eine turbulenzreduzierende Einrichtung (11) oberhalb des unteren der Siebe (4b) fließt.

5. Verfahren gemäß einem der vorstehenden Ansprüche, wobei die Teilchen aus undurchdringlichem Material bestehen.

6. Verfahren gemäß Anspruch 5, wobei die Teilchen (5) aus Polyethylen oder Polypropylen bestehen.

7. Verfahren gemäß einem der vorstehenden Ansprüche, wobei die Teilchen (5) durch Abrieb, Mahlen oder chemische Behandlung oder durch den Einschluss von festem Material aufgeraut sind.

8. Verfahren gemäß Anspruch 7, wobei das feste Material wasserlöslich ist.

9. Verfahren gemäß einem der vorstehenden Ansprüche, wobei die Form der Teilchen (5) Winkel enthält, aus denen sich Biomasse nicht leicht entfernen lässt.

10. Verfahren gemäß einem der vorstehenden Ansprüche, wobei es sich bei der Flüssigkeit um Abwasser handelt.

11. Verfahren gemäß einem der vorstehenden Ansprüche, wobei die Strömungsgeschwindigkeit des Gases, im Wesentlichen ohne das Bett zu stören, 1 bis 20 m/h beträgt und die Strömungsgeschwindigkeit des in gewissen Abständen eingesetzten Gases 5 bis 50 m/h beträgt.

12. Verfahren gemäß einem der vorstehenden Ansprüche, wobei die Teilchen (5) eine maximale Abmessung von 1 bis 10 mm haben.

## Revendications

1. Un procédé de traitement biologique d'un liquide et qui retire ainsi les impuretés biodégradables dudit liquide, comprenant les étapes consistant à amener le liquide à s'écouler vers le haut d'une colonne (1) présentant une entrée inférieure de liquide (7), une sortie supérieure de liquide (2) et un écran interne intermédiaire (4) en dessous duquel est confiné un lit de particules flottantes (5) sur lequel de la biomasse est amenée à croître, à actionner de manière intermittente des moyens d'expansion pour dilater le lit de particules flottantes (5), et à retirer le liquide portant la biomasse, **caractérisé en ce que**, normalement, du gaz est introduit dans ledit liquide à un premier taux pour s'écouler vers le haut à travers ledit liquide de telle manière que ledit lit soit maintenu sensiblement non perturbé, et du gaz est introduit de manière intermittente dans ledit liquide à un second taux plus élevé que ledit premier taux pour s'écouler vers le haut à travers ledit liquide pour dilater ledit lit et, le lit étant dans son état dilaté, décaper les particules (5) pour retirer une proportion de la biomasse des particules (5), **en ce que** l'expansion du lit est provoquée uniquement par ledit gaz introduit dans ledit liquide audit second taux, et **en ce que** ledit retrait comprend le fait d'évacuer de ladite colonne (1) ledit liquide portant la biomasse.

2. Un procédé selon la revendication 1, dans lequel le gaz introduit audit premier taux contient de l'oxygène.

3. Un procédé selon la revendication 1 ou 2, dans lequel le liquide s'écoulant vers le haut de la colonne (1) passe à travers un second écran interne intermédiaire (4b) et un second lit de particules flottantes (5b) confinées en-dessous du second écran (4b).

4. Un procédé selon la revendication 3, dans lequel le liquide s'écoulant vers le haut de la colonne (1) passe à travers des moyens de réduction de turbulence (11) au-dessus du plus bas des écrans (4b).

5. Un procédé selon une quelconque revendication précédente, dans lequel lesdites particules sont des matières imperméables.

6. Un procédé selon la revendication 5, dans lequel les particules (5) sont en polyéthylène ou polypropylène.

7. Un procédé selon une quelconque revendication précédente, dans lequel les particules (5) ont été rendues rugueuses par abrasion, fraisage ou traitement chimique, ou par l'inclusion d'une matière solide.

8. Un procédé selon la revendication 7, dans lequel la matière solide est soluble dans l'eau.

9. Un procédé selon une quelconque revendication précédente, dans lequel la forme des particules (5) présente des angles inclus à partir desquels la biomasse ne peut pas être facilement retirée.

10. Un procédé selon une quelconque revendication précédente, dans lequel le liquide est de l'eau d'égout.

11. Un procédé selon une quelconque revendication précédente, dans lequel le taux d'écoulement des gaz, sensiblement sans perturber le lit, est de 1 à 20 m/h, et le taux d'écoulement intermittent des gaz est de 0 à 50 m/h.

12. Un procédé selon une quelconque revendication précédente, dans lequel les particules (5) sont de 1 à 10 mm en dimension maximum.
